# EUROPEAN PATENT SPECIFICATION

(11) **EP 3 773 008 B1**
(45) Date of publication and mention of the grant of the patent: **05.10.2022**
(21) Application number: 19713084.2
(22) Date of filing: 01.04.2019
(51) Int. Cl.: A23L 27/40, A23L 33/21, A23L 33/22, A23L 23/10, A23L 29/212

(54) **PROCESS FOR PREPARING A SALT-FIBER POWDER WITH BINDING PROPERTIES**
VERFAHREN ZUR HERSTELLUNG VON EINER MISCHUNG AUS SALZ UND BALLASTSTOFF AUFWEISEND BINDUNGSEIGENSCHAFTEN
PROCÉDÉ DE PRÉPARATION D'UNE MÉLANGE DE SEL ET DE FIBRES ALIMENTAIRES AYANT PROPRIÉTÉS DE LIAISON

(30) Priority: 06.04.2018 EP 18166008
(43) Date of publication of application: 17.02.2021
(73) Proprietor: Société des Produits Nestlé S.A., 1800 Vevey (CH)
(72) Inventor: BOBE, Ulrich, 78247 Hilzingen (DE); SCHROEDER, Volker, 88633 Heiligenberg (DE); GADDIPATI, Sanyasi, Beachwood, OH 44122 (US); PERDANA, Jimmy, 78224 Singen (DE); KIM, Youngbin, 73525 Schwäbisch Gmünd (DE); KEHLENBECK, Volker, 78351 Bodman-Ludwigshafen (DE); BOZON, Annabel, Sheffield S10 2QA (GB)
(74) Representative: Dinger, Hansjörg
(86) International application number: PCT/EP2019/058180
(87) International publication number: WO 2019/192956

(56) References cited:
- WO-A1-03/003858
- WO-A1-2004/049831
- WO-A1-2007/085609
- WO-A1-2017/097499
- WO-A1-2017/171553
- US-A- 5 034 378
- Anonymous: "A. Vogel Herbamare Original", , pages 1-3, Retrieved from the Internet: URL:https://www.avogel.ca/en/health-food/h erbamare.php [retrieved on 2021-09-10]

## Description

### Field of the Invention

The present invention relates to a salt-fiber powder, in particular to a process for preparing a salt-fiber powder with binding properties. The process comprises mixing salt, fiber and water before, during or after dissolution of the salt in the water, followed by drying the mixture and optionally milling to obtain a salt-fiber powder.

### Background of the Invention

Salt, or sodium chloride (NaCI), has been used as a food preservative and a seasoning agent for years and years. In certain cultures, in which prepared foods are widely consumed, salt has become the most widely used seasoning agent, so much so that it is arguably used more than it should be or at least more than might be recommended for maintaining healthy eating practices. Salt is also the main ingredient in a bouillon tablet/cube. A bouillon tablet formed by compressing ingredients into a tablet shape, for example a cube, is widely used as a concentrate to prepare a bouillon, a broth or a soup. The bouillon tablet is normally added to a hot aqueous solution, allowing it to dissolve. In addition, a bouillon tablet may be used when preparing other dishes, as a seasoning product. The dissolution time of bouillon tablets highly depends on its degree of compaction which can be measured / expressed by the hardness of such a product. The reason to compact powders in a regular form presents several advantages for the commercialisation (e.g. reduction of volume, optimisation of packaging material usage, shelf life and convenience). A habit developed by users of bouillon tablets is the crumbling of the tablet or cube into the dish during preparation process either to ensure good distribution and or to accelerate its dissolution time in the cooking water. This crumbliness is one of the attributes that needs to be ensured during shelf life and therefore a post-hardening of the tablet or cube has to be avoided. A minimum hardness is necessary to allow a wrapping of the tablet. A maximum hardness ensures that a normal user can break the tablet within fingers without the use of additional tools or appliances. A typical bouillon tablet or bouillon cube comprises salts, taste enhancing compounds like monosodium glutamate (MSG), sugars, starch or flour, fat, flavouring components, vegetables, meat extracts, spices, colourants etc. The amounts of the respective compounds may vary depending on the specific purpose of the product, the market or taste of the consumer that is aimed at.

A conventional way of manufacturing bouillon tablets comprises mixing powdered bouillon components with fat and pressing the mix into a tablet. In this type of bouillon tablet the fat is the main ingredient holding the structure together.

Nowadays there is a nutritional trend to avoid or at least reduce the consumption of fats rich in saturated fatty acids and to preferably consume oils rich in monounsaturated fatty acids and/or polyunsaturated fatty acids. WO2004/049831 describes how it is possible to have very little solid fat entrapped in a hard bouillon tablet provided the tablet also comprises crystals, a filler and a sticking agent. The sticking agent may comprise ingredients the addition of which (combined with an adequate increase of the water activity) impart a glass transition temperature to the final mixture which may be relatively easily exceeded during tableting. Such ingredients include meat extract, processed flavours and/or vegetables extracts.

Sticking agents used to bind together bouillon cubes with low fat contents are typically hygroscopic amorphous ingredients. These are activated in the bouillon mixture by the addition of water. This process of water addition can be problematic, for example it is difficult to ensure homogenous distribution of the water and a storage time up to 24 hours is needed to reach a water activity equilibrium. Crust formation may occur which requires stopping the mixer for cleaning. Sometimes lumps are formed in the mixtures which causes quality defects in the finished pressed tablets. In addition post hardening of the bouillon tablet may occur.

US5034378 disclose a flavor enhancing composition for human food comprised of an edible salt selected from the group consisting of sodium chloride, potassium chloride, and monosodium glutamate, and granulated or powdered fiber, said composition being in granular or powder form. WO2017171553 disclose a preparation of granules and popped granules comprising functional substances, or active substances, and a carrier material, or matrix material. WO2004049831 and WO03003858 disclose a hard bouillon tablet or cube which comprises only or mainly liquid oil and no or little fat besides non fat conventional bouillon ingredients. WO2017097499 disclose a bouillon tablet comprises salt, oil and/or fat and a culinary flavoring, characterized in that the tablet further comprises 1 to 25 dry wt% of a cereal bran. disclose a bouillon and/or seasoning tablet, which comprises 0.5 to 10wt% oil and/or 0 to 5wt% fat, binders, salt, between 2 and 3wt% of total water, and between 0.5 to 8wt% of cereal, vegetable or fruit fibers.

Hence, there is a persisting need in the art to find improved processes for forming bouillon tablets, especially bouillon tablets which use a new binding system despite the well-known binding system of amorphous binding and/or fat binding.

### Summary of the invention

An object of the present invention is to improve the state of the art and to provide an improved solution to overcome at least some of the inconveniences described above or at least to provide a useful alternative. The object of the present invention is achieved by the subject matter of the independent claims. The dependent claims further develop the idea of the present invention.

Accordingly, the present invention provides in a first aspect a process for the production of a salt-fiber powder, the process comprising the steps of:
a) mixing salt, fiber and water before, during or after dissolution of the salt in the water, wherein the salt is dissolved in the water at a ratio between 1:2.8 to 1:20;
b) drying the mixture of step a) to obtain a dry salt-fiber mass; and
c) milling the dry salt-fiber mass to obtain a salt-fiber powder;
wherein the salt-fiber powder comprises 10 to 90wt% salt and 10 to 90wt% fiber, wherein the fiber is a dietary fiber, cereal bran or combination thereof and wherein the fiber is selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus or combinations thereof and wherein the cereal bran is selected from the group consisting of rice bran, wheat bran, buckwheat bran, corn bran, oat bran, barley bran, or a combination thereof and wherein the salt-fiber powder does not contain added acid, added gum, added hydrocolloid or combination thereof.

It has been surprisingly found by the inventors that using a co-processed salt-fiber powder has very good flow-ability values and provides an efficient new binding system e.g. in a bouillon tablet.

The use of the salt-fiber powder increases the hardness of bouillon tablets/cubes after pressing. The obtained hardness can exceed the hardness that is commonly observed during pressing of bouillon cubes/tablets. At the same time, the produced bouillon products can still be crumbled. So far, such a behaviour has not been observed for comparable hardness values. This strongly indicates that a different and new binding mechanism is present. Due to this, cubes/tablets can be easily produced (high hardness advantageous for manufacturing) but at the same time show good crumbliness. Crumbliness is a key Driver of liking for consumers and is thus desired. In addition the bouillon tablets/cubes has a faster dissolution time compared to standard bouillon tablets/cubes. This is very surprising as due to the higher hardness a slower dissolution time is expected.

In addition the salt-fiber powder is used to produce bouillon cubes with reduced salt content (e.g. between 10 to 50% reduction). It was surprisingly found that cubes/tablets could be pressed even though a high fibre content was used (fibres are elastic and can lead to capping/breakage after pressing). This behaviour might be explained by the entrapment of salt in fibers. It enables the use of higher contents of fibers in applications. It should also be mentioned that the flow-ability is positively influenced by using the salt-fiber powder compared to pure fibres.

### Detailed Description of the invention

Consequently the present invention relates to a process for the production of a salt-fiber powder, the process comprising the steps of:
a) mixing salt, fiber and water before, during or after dissolution of the salt in the water, wherein the salt is dissolved in the water at a ratio between 1:2.8 to 1:20;
b) drying the mixture of step a) to obtain a dry salt-fiber mass; and
c) milling the dry salt-fiber mass to obtain a salt-fiber powder;
wherein the salt-fiber powder comprises 10 to 90wt% salt and 10 to 90wt% fiber, wherein the fiber is a dietary fiber, cereal bran or combination thereof and wherein the fiber is selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus or combinations thereof and wherein the cereal bran is selected from the group consisting of rice bran, wheat bran, buckwheat bran, corn bran, oat bran, barley bran, or a combination thereof and wherein the salt-fiber powder does not contain added acid, added gum, added hydrocolloid or combination thereof.

An aspect of the invention provides the use of the salt-fiber powder to obtain a bouillon tablet.

"Salt" according to this invention means edible salts capable of imparting or enhancing a salty taste perception. Salt is selected from the group consisting of sodium chloride, potassium chloride, ammonium chloride or a combination thereof, more preferably sodium chloride.

The term "dissolution" according to this invention means that salt is dissolved within water. Salt is dissolved in water at a ratio between 1:2.8 to 1:20, preferably 1:2.8 to 1:20, preferably 1:2.8 to 1:15, preferably 1:2.8 to 1:10, preferably 1:2.8 to 1:6, preferably 1:3 to 1:20, preferably 1:3 to 1:15, preferably 1:3 to 1:10, preferably 1:3 to 1:6, preferably 1:4 to 1:20, preferably 1:4 to 1:15, preferably 1:4 to 1:10, preferably 1:4 to 1:6. In a preferred embodiment a saturated water-salt solution is obtained. In an embodiment the fibers and the water are mixed after dissolution of the salt in the water.

"Fibers" according to this invention are dietary fibers, cereal bran or a combination thereof. Dietary fiber consists of the remnants of edible plant cells, polysaccharides, lignin and associated substances resistant to (hydrolysis) digestion by the alimentary enzymes of humans. The dietary fibers are from vegetables, fruits, cereal or combinations thereof. Dietary fibers are selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus or combinations thereof, preferably carrot, beetroot, pumpkin, citrus, wheat, oat, bamboo, tomato or combinations thereof. "Bran" according to this invention is the outer layers of the grains consists of pericarp, testa, aleurone layer germ, and may comprise of a part of the starchy endosperm. Commercial bran preparations contain variable amounts of the starchy endosperm and germ depending on the variety of cereal and the milling process. Bran mainly is obtained from cereal grain, such as barley, buckwheat, bulgur, canary grass, common oat (Avena sativa, also referred to herein as oats), corn, millet, rice (e.g. black rice, brown rice and/or wild rice), rye, sorghum, spelt, teff, triticale, wheat and, wheat berries. More preferred whole grain cereals are those from the monocotyledonous plants of the Poaceae family (grass family) cultivated for their edible, starchy grains. Plant species that do not belong to the grass family also produce starchy seeds or fruits that may be used in the same way as cereal grains, are called pseudo-cereals. Examples of pseudo- cereals include amaranth, buckwheat, tartar buckwheat and quinoa. Unless the context herein clearly indicates, otherwise, the term 'cereal' as used herein includes both cereal and pseudo-cereals; and the brans used herein may be from either type. In general, the source of grain that is used depends on the product to which it is to be added, since each grain has its own taste profile.

In one embodiment of the present invention, the cereal bran is selected from the group consisting of rice bran, wheat bran, buckwheat bran, corn bran, oat bran, barley bran, or a combination thereof.

Depending on the type of cereal grain, the bran constitutes approximately 3-30% of the kernel dry weight. Major component of the bran is dietary fiber. In one embodiment of the invention where the bran originates from whole grains from wheat, the bran may usefully comprise components in the following amounts: fibres 30-70% (w/w), starch 20-50% (w/w), proteins 5-20% (w/w), fat 0.5-10% (w/w).

The bran in the composition of the invention may optionally heat-treated and can be coarse or powdered and to reduce its particle size and achieve the particle properties defined. In a preferred embodiment, the bran is powdered cereal bran. Methods of producing powdered bran are known to the person skilled in the art.

In an embodiment of the present invention the cereal bran comprised in the tablet of the present invention is milled. Preferably, the cereal bran is dry milled. Typically, milling transforms the cereal bran into a more palatable form by reducing the particle size of the bran. Milling of the bran has the advantage that it e.g. improves the homogeneity of the final product, that it improves the mixing efficiency of the bran and the other ingredients, that it improves the binding ability between the different ingredients, that it improves the digestibility of the bran by the consumer. Milling preferably reduces the particle size of the cereal bran.

The fibers (dietary fibers, cereal bran or combination thereof) are in a powdered form have a particle size of from 5µm to 1000µm, preferably 5µm to 1000µm, preferably 5µm to 800µm, preferably 5µm to 700µm, preferably 5µm to 500µm, preferably 15µm to 1000µm, preferably 15µm to 700µm, preferably 15µm to 500µm, preferably 20µm to 500µm, preferably 50µm to 800µm, preferably 5µm to 500µm, preferably 75µm to 700µm, preferably 80µm to 500µm, preferably 100µm to 600µm, preferably 100µm to 500µm, preferably 250µm to 500µm. Particle size and particle size distribution may be measured by laser diffraction using a Malvern Mastersizer.

"Salt-fiber mass" or "salt-fiber powder" according to this invention is an aggregation of fibers, wherein the salt crystallizes in, on and through the aggregated fiber having a surface protrusion of salt with a particle size of salt between 0.5-50µm, preferably 0.5-30µm, preferably 0.5-10µm, preferably 1-50µm, preferably 1-30µm, preferably 1-10µm, preferably 1.5-50µm, preferably 1.5-30µm, preferably 1.5-10µm, preferably 2-50 µm, preferably 2-30µm, preferably 2-10µm. The salt-fiber powder is not hallow. The dry salt-fiber powder has particle size distribution with a median diameter Dv50 in the range of 50 to 1500µm, preferably in the range of 100 to 1500µm, preferably in the range of 150 to 1500µm, preferably in the range of 200 to 1500µm, preferably in the range of 200 to 1000µm, preferably in the range of 225 to 1000µm, preferably in the range of 225 to 800µm, preferably in the range of 250 to 800µm. In a further embodiment, the salt-fiber powder comprises 10 to 90% of salt (by weight of the salt-fiber powder) and 10 to 90% of fibers (by weight of the salt-fiber powder), preferable 15 to 85% of salt and 15 to 85% of fibers, preferable 18 to 82% of salt and 18 to 82% of fibers, preferable 20 to 80% of salt and 20 to 80% of fibers, preferable 25 to 75% of salt and 25 to 75% of fibers, preferable 30 to 70% of salt and 30 to 70% of fibers, preferable 50% of salt and 50% of fibers (by weight of the salt-fiber powder). The salt-fiber powder does not contain added acid, added gum, added hydrocolloid or combination thereof. Gum according to this invention is xanthan gum, carrageenan, locust bean gum, agar, alginates, guar gum, arabic gum, gellan or combination thereof.

The particle size Dv50 is used in the conventional sense as the median of the particle size distribution. Median values are defined as the value where half of the population reside above this point, and half resides below this point. The Dv50 is the size in micrometer that splits the volume distribution with half above and half below this diameter. The particle size distribution may be measured by laser light scattering, microscopy or microscopy combined with image analysis. For example, the particle size distribution may be measured by laser light scattering. Since the primary result from laser diffraction is a volume distribution, the Dv50 cited is the volume median.

The drying step can be carried out by any commonly known drying technique such as air drying, oven drying, drum drying, vacuum drying, bed drying, microwave-vacuum drying, infrared radiation drying or combinations thereof. The drying step does not include spray drying. In an embodiment of the invention the drying is done at a temperature between 50 to 150°C, preferably between 50 to 120°C, preferably between 60 to 120°C, preferably between 60 to 100°C, preferably between 65 to 120°C, preferably between 65 to 100°C, preferably between 65 to 90°C, preferably between 65 to 80°C. Before drying the salt-fiber mass has a viscosity of at least 600mPa.s, preferably at least 800mPa.s, preferably at least 1000mPa.s. For spray drying a viscosity of below 350mPa.s is used. In the presence of particles in the slurry, further considerable reduction of the maximum viscosity in the spray drying feed is usually essential to avoid clogging of the spray dryer atomiser. Viscosity is measured with Rheometer at shear rate of 10 s⁻¹ using MCR300 rheometer with measuring cylinder CC27 and TEZ150P Peltier thermostatting unit (Anton Paar GmbH, Germany).

Milling according to this invention is a process that breaks solid materials into smaller pieces by grinding, crushing, or cutting. Milling can be carried out by any commonly known milling techniques such as roll mill, hammer mill, chopper mill, ball mill, SAG mil, rod mil or combinations thereof.

In a further embodiment "dry salt-fiber powder" according to this invention has a water activity below 0.35, preferably below 0.30, preferably between 0.1-0.35, preferably between 0.1-0.3. Wetted fiber has a water activity of at least 0.6, preferably at least 0.7.

"Flow-ability" means flow properties on how easily a powder flows. Flow-ability (*ff_{c}*) is quantified as the ratio of consolidation stress *σ*₁ to unconfined yield strength *σ_{c}* according to "Schulze, D. (2006). Flow properties of powders and bulk solids. Braunschweig/Wolfenbuttel, Germany: University of Applied Sciences." In an embodiment flow-ability (*ff_{c}*) of the dry salt-fiber powder is at least 2.5 at 23°C, preferably between the range of 2.5 to 20 at 23°C, preferably at least 3 at 23°C, preferably between the range of 3 to 15 at 23°C. In an embodiment flow-ability (*ff_{c}*) of the bouillon powder is at least 2.5 at 23°C, preferably between the range of 2.5 to 12 at 23°C, preferably between the range of 2.7 to 10 at 23°C, preferably at least 3 at 23°C, preferably between the range of 3 to 10 at 23°C, preferably between the range of 3.2 to 10 at 23°C, preferably between the range of 3.2 to 7 at 23°C. Flow-ability was measured using a Schulze Ring Shear Tester RST-01.pc according to ASTM D6467. Flow-ability measurements were carried out with pre-shear normal stress set to 2600 Pa and shear normal stress to 390, 1235, and 2080 Pa.

In an embodiment the bouillon tablet is shelf-stable over 12 months and therefore has a water activity of below 0.55, preferably between 0.10 to 0.55, preferably below 0.5, preferably between 0.1 to 0.5.

In an embodiment, the bouillon tablet has a tablet hardness of at least 90 N, preferably at least 95N, preferably at least 100N, preferably at least 110N, preferably at least 120N, preferably between 90 to 700N, preferably between 90 to 500N, preferably between 90 to 300N, preferably between 100 to 700N, preferably between 100 to 500N, preferably between 100 to 300N.

Those skilled in the art will understand that they can freely combine all features of the present invention disclosed herein. In particular, features described for different embodiments of the present invention may be combined. Where known equivalents exist to specific features, such equivalents are incorporated as if specifically referred to in this specification.

### Examples

### Example 1: Process

The general procedure for preparing powders with improved bulking and tabletting properties of the invention is as follows:
1. Dissolving salt ingredients in water
2. Add fiber to the solution obtained from step 1.
3. Followed by mixing
4. Drying
5. Milling (optional)

Water was placed in Thermomix TM5 (Vorwerk &Co. KG, Germany). Salt powder was weighed in PG5002S balance (Mettler-Toledo GmbH, Switzerland) and added to Thermomix. Mixing was carried out at speed setting of 3 for 3 minute at room temperature until all salt crystals were dissolved. Fiber was weighed in PG5002S balance (Mettler-Toledo GmbH, Switzerland) and added to Thermomix. Mixing was again carried out at speed setting of 3 for 3 minute at room temperature until all fiber were wetted and slurry was obtained. The slurry was then spread onto a baking pan; slurry thickness was maintained between 5 and 10 mm, then dried in Rational Self Cooking Centre Electric Combination Oven SCC202E (Rational AG, Germany). Drying was carried out for 12 h at 70 °C with 30% fan speed. The resulting cake was milled with FREWITT mill with sieve mesh size of 2 mm.

### Pressing of bouillon tablet/cube

Pressing of bouillon cube was carried out with Flexitab Tablet Pressing equipment (Roltgen GmbH, Germany). Approximately 3 gram of bouillon powder was fed to tableting mould (14 mm in length and 14 mm in width) and pressed with force between 5.0 and 6.0 kN.

### Hardness measurement of tablet/cube

Hardness measurement was carried out using Texture Analyser TA-HDplus (Stable Micro System, UK) equipped with 250 kg load cell and P/75 compression platen. Texture Analyser test mode was set to "Compression" with pre-test speed of 1 mm/s, test speed of 0.5 mm/s, post-test speed of 10 mm/s, target mode of "Distance", distance of 4 mm, halt time was set to "No", way back of 10 mm, trigger type to "Auto(Force), and trigger force of 50 gram. Hardness is measured not in the orientation where the tablet/cube were originally pressed in Flexitab; but from the side. Hardness measurement was carried out in 10 replication.

### Example 2-5: Comp. Process

In case the fiber and salts are dry-mixed (without any further processing step), the resulting mixes cannot be tableted upon compaction using our tableting system.

| | Comp Ex. 2 | Comp. Ex. 3 | Comp. Ex 4 | Comp. Ex. 5 |
|---|---|---|---|---|
| Fiber type | Carrot fiber | Wheat bran | Wheat fiber | Citrus fiber |
| Fiber [gram] | 50 | 50 | 50 | 50 |
| Salt NaCl [gram] | 50 | 50 | 50 | 50 |
| Water activity [-] | 0,27 | 0,28 | 0,27 | 0,26 |
| Tablet hardness | n.a. | n.a. | n.a. | n.a. |
| Remarks | Remain powder upon compaction | Remain powder upon compaction | Remain powder upon compaction | Remain powder upon compaction |

### Example 6-9: Comp. Process

In case the fiber has been added to water, further mixed and afterwards dried before it is dry-mixed with salt, the resulting mixes cannot be tableted upon compaction using our tableting system. Therefore comp. examples 6 to 9 were processed according to the process of example 1 by replacing a salt-water solution with pure water. This means, that fibers have been mixed with pure water only and dried again. The resulting fibers have been mixed with dry salt (no salt-water solution) and the resulting dry mixes cannot be tableted upon compaction and remain as powder using our tableting system. This shows, that a compaction can only be achieved with the process of our invention (fibers added to a water-salt solution, further mixed and afterwards dried the resulting mixes can be tableted upon compaction using our tableting system).

| | Comp Ex. 6 | Comp. Ex. 7 | Comp. Ex 8 | Comp. Ex. 9 |
|---|---|---|---|---|
| Fiber type | Carrot fiber | Wheat bran | Wheat fiber | Citrus fiber |
| Fiber [gram] | 50 | 50 | 50 | 50 |
| Salt NaCl [gram] | 50 | 50 | 50 | 50 |
| Water [gram] | 200 | 200 | 200 | 200 |
| Water activity [-] | 0,27 | 0,28 | 0,27 | 0,26 |
| FFC at 23 °C | 2.3 | 2.4 | - | - |
| Tablet hardness | n.a. | n.a. | n.a. | n.a. |
| Remarks | Remain powder upon compaction | Remain powder upon compaction | Remain powder upon compaction | Remain powder upon compaction |

### Examples 10-13: Different origin of fiber

Different kind of fibers have been tested according to the process of example 1. In case the fiber has been added to a water-salt solution, further mixed and afterwards dried the resulting mixes can be tableted upon compaction using our tableting system.

| | Ex. 10 | Ex. 11 | Ex. 12 | Ex. 13 |
|---|---|---|---|---|
| Fiber type | Carrot fiber | Wheat bran | Wheat fiber | Citrus fiber |
| Fiber [gram] | 50 | 50 | 50 | 50 |
| Salt NaCl [gram] | 50 | 50 | 50 | 50 |
| Water [gram] | 200 | 200 | 200 | 200 |
| Water activity [-] | 0,28 | 0,25 | 0,26 | 0,27 |
| FFC at 23 °C | 10.8 | 11 | - | - |
| Tablet hardness [N] | 1005 | 420 | 943 | 2320 |
| Remarks | Good tablet, sharp (not brittle) edge | Good tablet, sharp (not brittle) edge | Good tablet, sharp (not brittle) edge | Good tablet, sharp (not brittle) edge |

Within examples 10 and 11 it is shown that the flow-ability of the dry salt-bran powder have a value of between 10.8 to 11 and is much better as shown within comparison examples 7 and 7 having only a flow-ability value of between 2.3 to 2.4.

The dissolution time of the tablet of example 10 is only 16sec. This is surprising as the tablet is much harder compared to a normal bouillon tablet of approximately 150-200N and a dissolution time between 30-45 sec.

### Examples 14-20: Different ratio fiber-salt

Different fiber-salt ratios have been tested according to the process of example 1.

Comparative example 14 shows the result if pure salt is used. Comparative example 17 or comparative example 20 shows the result if only fibers or bran are mixed with pure water (without water-salt solution) dried and pressed afterwards. This shows, that a compaction can only be achieved with the process of our invention (fibers added to a water-salt solution, further mixed and afterwards dried the resulting mixes can be tableted upon compaction using our tableting system).

| | Comp Ex. 14 | Ex. 15 | Ex. 16 | Comp. Ex. 17 |
|---|---|---|---|---|
| Carrot fiber [gram] | 0 | 20 | 80 | 100 |
| Salt NaCl [gram] | 100 | 80 | 20 | 0 |
| Water [gram] | n.a. | 200 | 200 | 200 |
| Water activity [-] | n.a. | 0,29 | 0,24 | 0,27 |
| Tablet hardness [N] | 17 | 916 | 506 | 167 |
| Remarks | Tablet disintegrate readily | | | |

| | Ex. 18 | Ex. 19 | Comp. Ex. 20 |
|---|---|---|---|
| Wheat bran [gram] | 20 | 80 | 100 |
| Salt NaCl [gram] | 80 | 20 | 0 |
| Water [gram] | 200 | 200 | 200 |
| Water activity [-] | 0,27 | 0,27 | 0,28 |
| Tablet hardness [N] | 451 | 329 | 127 |
| Remarks | | | |

### Examples 21-22: Different ratio of water

| | Ex. 21 | Ex. 22 |
|---|---|---|
| Carrot fiber [gram] | 50 | 50 |
| Salt NaCl [gram] | 50 | 50 |
| Water [gram] | 400 | 700 |
| Water activity [-] | 0,25 | 0,27 |
| Tablet hardness [N] | 969 | 849 |
| Remarks | | |

The minimum ratio of salt to water is 1:2.8 to obtain a saturated water-salt-solution. Examples 21 and 22 shows that higher amount of water can be used without having a significant influence on the obtained salt-fiber powder and obtained hardness.

### Example 23: Different salt origin

| | Ex. 23 |
|---|---|
| Carrot fiber [gram] | 50 |
| Salt KCI [gram] | 50 |
| Water [gram] | 250 |
| Water activity [-] | 0,30 |
| Tablet hardness [N] | 720 |
| Remarks | Similar behaviour to NaCl |

### Examples 24-34: Application in bouillon cubes

### Preparation of bouillon powder

All bouillon powder ingredients were weighted in PG5002S balance (Mettler-Toledo, USA) and then mixed in Thermomix TM5 (Vorwerk &Co. KG, Germany). Mixing was carried out at speed setting of 3 for 30 s with propeller rotation was set to reverse direction. The resulting powder was then stored in a climate chamber ICH-110 (Memmert GmbH, Germany) at 25 °C with 48 % relative humidity with fan speed of 40 % for 24 h at prior to pressing.

### Water activity measurement

Water activity was measured with Hygrolab HC2-aw-USB (Rotronic AG, Switzerland) connected to PC with HW4-P-QUICK-Vx software (Rotronic AG, Switzerland). Measurement were carried out at 25.0 ±0.5 °C according to AOAC 978.18-1978, Water activity of canned vegetables.

### Flow-ability

Flow-ability was measured using a Schulze Ring Shear Tester RST-01.pc according to ASTM D6467. Flow-ability measurements were carried out with pre-shear normal stress set to 2600 Pa and shear normal stress to 390, 1235, and 2080 Pa.

### Pressing of bouillon tablet/cube and hardness measurement of tablet/cube

Pressing of bouillon cube and hardness measurement was carried out as described above.

| **Recipe** | **Comp. Ex. 24** | **Comp. Ex. 25** |
|---|---|---|
| Salt [g] | 58 | 29 |
| Carrot fiber [g] | 0 | 29 |
| Sugar [g] | 11 | 11 |
| MSG [g] | 9 | 9 |
| Native potato starch [g] | 8 | 8 |
| Flavour [g] | 9 | 9 |
| Oil [g] | 4 | 4 |
| Spices [g] | 1 | 1 |
| FFC at 23 °C | 2,6 | 2,2 |
| Water activity [-] | 0,48 | 0,49 |
| Average Hardness [N] | 74 | 58 |
| Tablet breakage [%] | 10 | 45 |

| **Recipe** | **Ex. 26** | **Ex. 27** | **Ex. 28** | **Ex. 29** |
|---|---|---|---|---|
| Salt [g] | 0 | 0 | 0 | 0 |
| Sugar [g] | 11 | 11 | 11 | 11 |
| MSG [g] | 9 | 9 | 9 | 9 |
| Native potato starch [g] | 8 | 8 | 8 | 8 |
| Flavour [g] | 9 | 9 | 9 | 9 |
| Oil [g] | 4 | 4 | 4 | 4 |
| Spices [g] | 1 | 1 | 1 | 1 |
| Co processed carrot fiber-salt [g] | 58 | 58 | 58 | 58 |
| Ratio of carrot fiber : salt [wt%] | 20:80 | 50:50 | 80:20 | 90:10 |
| FFC at 23 °C | 3,6 | 3,5 | 3,2 | 2,7 |
| Water activity | 0,48 | 0,49 | 0,47 | 0,47 |
| Average Hardness [N] | 248 | 249 | 113 | 97 |
| Tablet breakage [%] | <2 | <2 | <3 | 4 |

| **Recipe** | **Ex. 30** | **Ex. 31** | **Ex. 32** | **Ex. 33** |
|---|---|---|---|---|
| Salt [g] | 29 | 29 | 29 | 46 |
| Sugar [g] | 11 | 11 | 11 | 11 |
| MSG [g] | 9 | 9 | 9 | 9 |
| Native potato starch [g] | 8 | 8 | 8 | 8 |
| Flavour [g] | 9 | 9 | 9 | 9 |
| Oil [g] | 4 | 4 | 4 | 0 |
| Palm fat [g] | 0 | 0 | 0 | 6 |
| Spices [g] | 1 | 1 | 1 | 1 |
| Co processed carrot fiber-salt [g] | 29 | 29 | 29 | 10 |
| Ratio of carrot fiber: salt [wt%] | 20:80 | 50:50 | 80:20 | 50:50 |
| FFC at 23 °C | 3,7 | 3,7 | 3,5 | 3,3 |
| Water activity | 0,48 | 0,48 | 0,49 | 0,43 |
| Average Hardness [N] | 120 | 113 | 96 | 103 |
| Tablet breakage [%] | <2 | <2 | 4 | <3 |

| **Recipe** | **Ex. 34** |
|---|---|
| Salt [g] | 0 |
| Sugar [g] | 11 |
| MSG | 9 |
| Native potato starch [g] | 8 |
| Flavour [g] | 9 |
| Oil [g] | 4 |
| Spices [g] | 1 |
| Co processed wheat bran-salt [g] | 58 |
| Ratio of wheat bran : salt [wt%] | 20:80 |
| FFC at 23 °C | 3,2 |
| Water activity [-] | 0,48 |
| Average Hardness [N] | 149 |
| Tablet breakage [%] | <2 |

Comparative example 24 shows a tablet using pure salt without using a co-processed salt-fiber powder. Comparative example 25 shows a tablet using a dry mix of salt and fiber without using a co-processed salt-fiber powder. Compared to pure salt the hardness of the tablet is reduced by using a dry mix of salt and fiber instead of pure salt. Example 27 shows the effect of a co-processed salt-fiber powder according to the invention compared to comparison example 25 using only a dry mix of salt and fiber without using a co-processed salt-fiber powder. The flow-ability of the bouillon powder is higher and the tablet hardness is much higher, which shows that the co-processed salt-fiber powder according to the invention leads to a new binding system. Example 26 and 28 to 33 shows that the invention works at different salt-fiber ratios and different amount of the salt-fiber powder. Example 34 has used cereal bran instead of fiber. Examples 30 to 33 have in addition to the co-processed salt-fiber mass providing the binding of the bouillon tablet also standard sodium chloride in the recipe.

## Claims

1. A process for the production of a salt-fiber powder, the process comprising the steps of:
a) mixing salt, fiber and water before, during or after dissolution of the salt in the water, wherein the salt is dissolved in the water at a ratio between 1:2.8 to 1:20;
b) drying the mixture of step a) to obtain a dry salt-fiber mass; and
c) milling the dry salt-fiber mass to obtain a salt-fiber powder;
wherein the salt-fiber powder comprises 10 to 90wt% salt and 10 to 90wt% fiber, wherein the fiber is a dietary fiber, cereal bran or combination thereof and wherein the fiber is selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus or combinations thereof and wherein the cereal bran is selected from the group consisting of rice bran, wheat bran, buckwheat bran, corn bran, oat bran, barley bran, or a combination thereof and wherein the salt-fiber powder does not contain added acid, added gum, added hydrocolloid or combination thereof.

2. A process for the production of a salt-fiber powder as claimed in claim 1, wherein the fibers of step a) are mixed after dissolution of the salt in the water.

3. A process for the production of a salt-fiber powder as claimed in any one of claims 1 to 2, wherein the salt-fiber powder comprises 20 to 80wt% salt and 20 to 80wt% fibers.

4. A process for the production of a salt-fiber powder as claimed in any one of claims 1 to 3, wherein the mixture of step a) has a viscosity of at least 600mPa.s, wherein the viscosity is measured with Rheometer at shear rate of 10 s⁻¹ using MCR300 rheometer with measuring cylinder CC27 and TEZ150P Peltier thermostatting unit.

5. A process for the production of a salt-fiber powder as claimed in any one of claims 1 to 4, wherein the drying is done at a temperature between 50 to 150°C.

6. A process for the production of a salt-fiber powder as claimed in any one of claims 1 to 5, wherein the drying is done by oven drying, air drying, drum drying, vacuum drying, bed drying, microwave-vacuum drying, infrared radiation drying or combinations thereof.

7. The use of a salt-fiber powder obtainable by the process of one of the claims 1 to 6 for preparing a bouillon tablet.

## Patentansprüche

1. Verfahren zur Herstellung eines Salzfaserpulvers, wobei das Verfahren die Schritte umfasst:
a) Mischen von Salz, Faser und Wasser vor, während oder nach Auflösen des Salzes in dem Wasser, wobei das Salz in dem Wasser in einem Verhältnis zwischen 1:2,8 bis 1:20 gelöst ist;
b) Trocknen der Mischung von Schritt a), um eine trockene Salzfasermasse zu erhalten; und
c) Mahlen der trockenen Salzfasermasse, um ein Salzfaserpulver zu erhalten;
wobei das Salzfaserpulver zu 10 bis 90 Gew.-% Salz und zu 10 bis 90 Gew.-% Faser umfasst, wobei die Faser eine Ballaststoff-Faser, Getreidekleie oder eine Kombination davon ist, und wobei die Faser ausgewählt ist aus mindestens einem von Karotte, Rote Beete, Kürbis, Zitrusfrucht, Weizen, Hafer, Bambus, Tomate, Paprika, Lauch, Ingwer, Zwiebel, Grünkohl, Pastinake, Sellerie, Gurke, Zucchini, Brokkoli, Kohlrabi, Spargel oder Kombinationen davon, und wobei die Getreidekleie ausgewählt ist aus der Gruppe bestehend aus Reiskleie, Weizenkleie, Buchweizenkleie, Maiskleie, Haferkleie, Gerstenkleie oder einer Kombination davon und wobei das Salzfaserpulver keine Zugabe von Säure, zugesetztem Gummi, zugesetztem Hydrokolloid oder eine Kombination davon enthält.

2. Verfahren zur Herstellung eines Salzfaserpulvers nach Anspruch 1, wobei die Fasern aus Schritt a) nach Auflösen des Salzes in dem Wasser gemischt werden.

3. Verfahren zur Herstellung eines Salzfaserpulvers nach einem der Ansprüche 1 bis 2, wobei das Salzfaserpulver zu 20 bis 80 Gew.-% Salz und zu 20 bis 80 Gew.-% Fasern umfasst.

4. Verfahren zur Herstellung eines Salzfaserpulvers nach einem der Ansprüche 1 bis 3, wobei die Mischung aus Schritt a) eine Viskosität von mindestens 600 mPa.s aufweist, wobei die Viskosität mit einem Rheometer mit einer Scherrate von 10 s⁻¹, mit einem MCR300-Rheometer mit Messzylinder CC27 und TEZ150P Peltier-Thermostateinheit gemessen wird.

5. Verfahren zur Herstellung eines Salzfaserpulvers nach einem der Ansprüche 1 bis 4, wobei das Trocknen bei einer Temperatur zwischen 50 bis 150 °C erfolgt.

6. Verfahren zur Herstellung eines Salzfaserpulvers nach einem der Ansprüche 1 bis 5, wobei das Trocknen durch Ofentrocknung, Lufttrocknung, Trommeltrocknung, Vakuumtrocknung, Betttrocknung, Mikrowellenvakuumtrocknung, Infrarotstrahlungstrocknung oder Kombinationen davon erfolgt.

7. Verwendung eines Salzfaserpulvers, das durch das Verfahren nach einem der Ansprüche 1 bis 6 zur Herstellung einer Bouillontablette erhältlich ist.

## Revendications

1. Procédé de production d'une poudre de sel-fibre, le procédé comprenant les étapes consistant à :
a) mélanger du sel, de la fibre et de l'eau avant, pendant ou après dissolution du sel dans l'eau, dans lequel le sel est dissous dans l'eau à un rapport entre 1:2,8 et 1:20 ;
b) sécher le mélange de l'étape a) pour obtenir une masse sèche de sel-fibre ; et
c) moudre la masse sèche de sel-fibre pour obtenir une poudre de sel-fibre ;
dans lequel la poudre de sel-fibre comprend 10 à 90 % en poids de sel et 10 a 90 % en poids de fibre, dans lequel la fibre est une fibre alimentaire, un son de céréales ou une combinaison de ceux-ci et dans lequel la fibre est choisie parmi au moins une parmi carotte, betterave, citrouille, agrumes, blé, avoine, bambou, tomate, poivron, poireau, gingembre, oignon, chou frisé, panais, céleri, concombre, courgette, brocoli, chou-rave, asperge ou combinaisons de ceux-ci et dans lequel le son de céréales est choisi dans le groupe constitué de son de riz, son de blé, son de sarrasin, son de maïs, son d'avoine, son d'orge, ou combinaison de ceux-ci et dans lequel la poudre de sel-fibre ne contient pas d'acide ajouté, de gomme ajoutée, d'hydrocolloïde ajouté ou de combinaison de ceux-ci.

2. Procédé de production d'une poudre de sel-fibre tel que revendiqué dans la revendication 1, dans lequel les fibres de l'étape a) sont mélangées après dissolution du sel dans l'eau.

3. Procédé de production d'une poudre de sel-fibre tel que revendiqué dans l'une quelconque des revendications 1 à 2, dans lequel la poudre de sel-fibre comprend 20 à 80 % en poids de sel et 20 à 80 % en poids de fibres.

4. Procédé de production d'une poudre de sel-fibre tel que revendiqué dans l'une quelconque des revendications 1 à 3, dans lequel le mélange de l'étape a) a une viscosité d'au moins 600 mPa.s, dans lequel la viscosité est mesurée avec un rhéomètre à un taux de cisaillement de 10 s⁻¹ en utilisant un rhéomètre MCR300 avec un cylindre de mesure CC27 et une unité thermostatique Peltier TEZ150P.

5. Procédé de production d'une poudre de sel-fibre tel que revendiqué dans l'une quelconque des revendications 1 à 4, dans lequel le séchage est fait à une température entre 50 et 150 °C.

6. Procédé de production d'une poudre de sel-fibre tel que revendiqué dans l'une quelconque des revendications 1 à 5, dans lequel le séchage est fait par séchage au four, séchage à l'air, séchage par tambour, séchage sous vide, séchage en lit, séchage par micro-ondes sous vide, séchage par rayonnement infrarouge ou combinaisons de ceux-ci.

7. Utilisation d'une poudre de sel-fibre pouvant être obtenue par le procédé selon l'une des revendications 1 à 6 pour la préparation d'une tablette de bouillon.
